# FASCICULE DE BREVET EUROPEEN

(11) **EP 0 743 079 B1**
(45) Date de publication et mention de la délivrance du brevet: **04.12.2002**
(21) Numéro de dépôt: 96401054.0
(22) Date de dépôt: 14.05.1996
(51) Int. Cl.: A62D 3/00

(54) **Traitement des cendres volantes issues d'un incinérateur de déchets et contenant des chlorures de métaux toxiques**
Verfahren zur Behandlung von schädlichen Metallen enthaltenden Flugstäuben von Müllverbrennungsanlagen
Treatment of fly ashes from waste incinerator containing toxic metal chlorides

(30) Priorité: 18.05.1995 FR 9505909
(43) Date de publication de la demande: 20.11.1996
(73) Titulaire: COMMISSARIAT A L'ENERGIE ATOMIQUE, 75015 Paris (FR)
(72) Inventeur: Cartier, René, 84130 Le Pontet (FR); Longuet, Thierry, 30330 Tresques (FR); Boen, Roger, 30130 Saint Alexandre (FR); Bres, Jean-Claude, 84430 Mondragon (FR)
(74) Mandataire: Dubois-Chabert, Guy

(56) Documents cités:
- US-A- 4 737 356
- US-A- 5 041 398
- PATENT ABSTRACTS OF JAPAN vol. 010, no. 004 (C-322), 9 Janvier 1986 & JP-A-60 165326 (YOKOHAMASHI;OTHERS: 01), 28 Août 1985,

## Description

La présente invention concerne le traitement des cendres volantes issues d'un incinérateur de déchets et contenant des chlorures de métaux toxiques.

Les résidus d'épuration des fumées d'incinération de déchets ménagers (encore appelés REFIOM) , comme les cendres volantes issues des déchets industriels ou nucléaires, peuvent contenir des quantités notables de composés chimiques incorporant des métaux toxiques.

Par métaux toxiques, on entend les métaux considérés comme polluants vis-à-vis de l'environnement. Ils comprennent les métaux lourds (tels que le zinc), des métaux alcalins ou alcalino-terreux (tels que le césium ou le strontium) et des métaux radioactifs. Ces métaux toxiques se retrouvent dans les déchets constitués par les ordures ménagères ou les rebuts des industries classiques ou nucléaires.

Lors de l'incinération des déchets, des réactions chimiques se produisent, provoquant notamment la formation de composés chimiques de ces métaux toxiques. Ces composés chimiques se retrouvent dans les REFIOM qui doivent être traités pour éviter la dispersion de ces composés nocifs dans l'environnement.

Il est connu de traiter des cendres volantes pour les rendre inertes vis-à-vis de l'environnement par des procédés de bitumage, de cimentation et de vitrification. La vitrification est une technique qui permet de réduire le volume des résidus d'incinération tout en confinant les éléments toxiques dans une matrice stable.

La plupart des déchets à incinérer contiennent du chlore qui formera des chlorures et notamment des chlorures de métaux lourds. Les ordures ménagères en contiennent potentiellement beaucoup, provenant par exemple d'articles en polychlorure de vinyle (PVC).

Ces chlorures de métaux toxiques sont solubles et nuisibles pour l'environnement. Les cendres volantes qui en contiennent ne peuvent être traitées en l'état car le chlore n'est quasiment pas confinable. Il est donc impératif de les rendre inertes vis-à-vis de l'environnement.

La présence de chlore dans les cendres volantes diminue les qualités du déchet bitumé ou cimenté et en particulier la résistance à la lixiviation.

Les chlorures de métaux lourds ne peuvent pas être incorporés dans un réseau vitreux ayant de bonnes qualités de confinement tel que le propose la technique de vitrification.

Pour tenter d'y pallier, deux types de traitement ont été proposés. Un premier type de traitement comprend la mise en oeuvre d'un procédé par voie humide pour éliminer les métaux lourds suivi d'un procédé permettant de rendre inerte le résidu et les métaux lourds. Un second type de traitement procède par vitrification, soit avec récupération des chlorures de métaux lourds dans le traitement des gaz et une opération pour rendre inertes ces métaux lourds ou pour les récupérer, soit en piègeant in situ les chlorures de métaux lourds dans une phase non miscible, visqueuse, située au-dessus de la phase vitrifiée (voir par exemple le document FR-A-2 697 451).

Jusqu'à maintenant, les traitements proposés s'avèrent difficile à mettre en oeuvre et coûteux.

On connaît ainsi par le document Patent Abstracts of Japan, vol. 010, n° 004 (C-322), 9 janvier 1986 et par JP-A-60 165 326, un procédé d'insolubilisation des métaux lourds et de leurs sels présents dans les cendres volantes résultant de l'incinération de déchets ménagers. Les cendres volantes sont mélangées avec un phosphate de métal alcalin avant d'être vitrifiées.

Le brevet américain 5 041 398 divulgue un procédé de traitement des cendres d'un incinérateur, les cendres contenant des métaux lourds. Il est prévu de faire subir à la fraction soluble des cendres volantes un traitement dans un réservoir contenant de l'eau et dans lequel des réactifs sont ajoutés pour obtenir un précipité. Ces réactifs peuvent comprendre du phosphate de diammonium mono-hydrogéné. Le précipité insoluble obtenu est ensuite vitrifié.

Afin de remédier à ces inconvénients, on propose, selon la présente invention, un procédé de phosphatation, à température élevée, des chlorures métalliques contenus dans les REFIOM. Ce procédé, appliqué dans un réacteur, permet d'obtenir les métaux lourds sous une autre forme chimique (phosphate au lieu de chlorure). Le produit obtenu, très enrichi en phosphates, peut être envoyé dans un réacteur de vitrification. Les phosphates s'incorporent aisément dans le réseau vitreux. Ils donnent des composés nettement moins volatils que les chlorures des métaux correspondants.

L'invention a donc pour objet un procédé de traitement des cendres volantes issues d'un incinérateur de déchets et contenant des chlorures de métaux toxiques, comprenant une étape consistant à soumettre lesdites cendres volantes à une réaction de phosphatation, à haute température, pour transformer les chlorures de métaux toxiques en phosphates, la réaction de phosphatation étant obtenue par l'ajout d'un réactif constitué d'un composé du phosphore, caractérisé en ce que ledit composé du phosphore est un composé non métallique et en ce que les produits chlorés obtenus sont évacués sous forme gazeuse.

De préférence, la température de la réaction est comprise entre 500 et 1200°C.

Le réactif peut être choisi parmi le groupe constitué de l'acide phosphorique, de l'anhydride phosphorique, et du phosphate d'ammonium. Il peut aussi être un composé organique du phosphore.

Le procédé selon l'invention peut être mis en oeuvre dans une installation pour le traitement des cendres volantes issues d'un incinérateur de déchets et contenant des chlorures de métaux toxiques, caractérisée en ce qu'elle comprend un réacteur comportant des moyens d'introduction desdites cendres volantes, des moyens d'introduction d'un réactif constitué d'un composé du phosphore, des moyens de chauffage permettant d'obtenir une réaction de phosphatation entre les cendres volantes et le composé du phosphore à une température comprise entre 500 et 1200°C, des moyens d'extraction des cendres phosphatées et des moyens d'évacuation des gaz issus de, la réaction entre les cendres volantes et le composé du phosphore.

Cette installation peut comprendre en outre un dépoussiéreur, connecté auxdits moyens d'évacuation des gaz, pour filtrer et récupérer les poussières contenues dans les gaz évacués. Ce dépoussiéreur peut être un dépoussiéreur à sec.

Le réacteur de l'installation peut avantageusement comporter en outre des moyens d'introduction desdites poussières pour les soumettre à nouveau à ladite réaction.

Elle peut aussi inclure un dispositif de refroidissement des fumées évacuées par les moyens d'évacuation.

Si les moyens de chauffage comportent au moins un brûleur, ce brûleur peut également servir de moyens d'introduction du réactif.

Le réacteur peut être du type construit autour d'un tube tournant.

Selon une variante de réalisation, le réacteur peut être constitué par un four de fusion pourvu de moyens permettant d'effectuer un processus de vitrification, le four de fusion permettant de réaliser consécutivement la phosphatation des cendres volantes et la vitrification des cendres phosphatées.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 illustre de manière schématique une première variante d'une installation pour le traitement de cendres volantes, selon l'invention,
- la figure 2 illustre de manière schématique une seconde variante d'une installation pour le traitement de cendres volantes, selon l'invention.

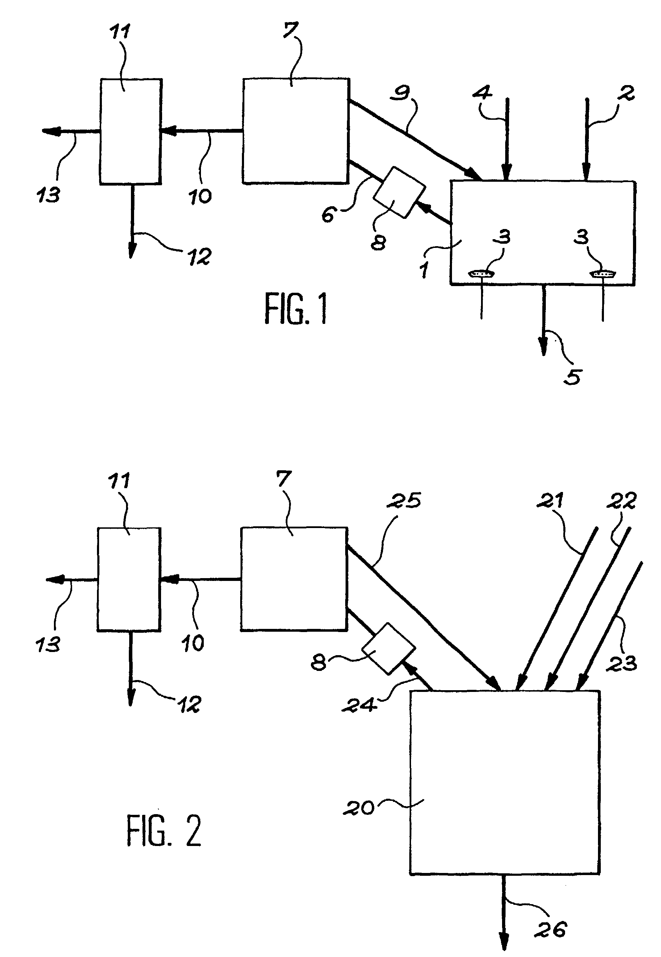

L'installation représentée à la figure 1 comprend un réacteur 1 de phosphatation des chlorures volatils. Un tel réacteur est bien connu dans le domaine de la chimie. Il est par exemple du type construit autour d'un tube tournant. Il permet d'effectuer un traitement thermique à une température comprise entre 500 et 1200°C. Le réactif contenant du phosphore sous une forme appropriée (un phosphate organique par exemple) peut être introduit dans le réacteur sous forme solide, liquide ou gazeuse grâce à un conduit d'amenée 2. Eventuellement, le réactif peut être introduit par l'intermédiaire d'un brûleur, par exemple par l'un des brûleurs 3 servant à chauffer l'intérieur du réacteur.

Un autre conduit d'amenée, le conduit 4, permet d'introduire les cendres volantes dans le réacteur.

Les cendres phosphatées se déposent au fond du réacteur d'où elles peuvent être extraites par un tiroir ou un dispositif d'extraction automatique représenté sous la référence 5.

Sous l'effet de la chaleur et du réactif, les chlorures métalliques contenus dans les cendres volantes se transforment en phosphates. Les gaz formés lors de la réaction sont évacués par le conduit d'évacuation 6, entraînant des poussières qui peuvent comprendre des chlorures métalliques n'ayant pas réagi.

Les gaz évacués par le conduit 6 sont dirigés vers le dépoussiéreur 7 après être passés par un dispositif de refroidissement des fumées 8. Ce dépoussiéreur 7 est par exemple un système de filtration à sec, récupérant les poussières pour les renvoyer dans le réacteur 1 grâce au conduit 9. Ce recyclage permet donc de ramener dans le réacteur les chlorures métalliques n'ayant pas réagi.

Les fumées dépoussiérées sont évacuées du dépoussiéreur 7 grâce au conduit 10 qui les amène dans le système 11 de neutralisation des gaz acides contenus dans les fumées. En 12, on récupère des sels non toxiques tandis que la sortie des gaz se fait en 13.

Les cendres phosphatées obtenues peuvent être facilement vitrifiées par les techniques connues.

Le procédé de phosphatation selon la présente invention peut aussi être associé à un procédé de cimentàtion ou de bitumage qui conduit à un déchet ultime de meilleure qualité car exempt de chlore. Enfin, si ce procédé de phosphatation conduit à un déchet suffisamment insoluble, ce déchet peut être stocké tel quel.

Dans la variante représentée à la figure 2, au réacteur de phosphatation on a substitué un four de fusion 20 permettant d'effectuer la phosphatation et la vitrification dans le même réacteur, le traitement des gaz étant identique au cas précédent.

Le four 20 de la figure 2 reçoit donc simultanément des cendres volantes par le conduit d'amenée 21, le réactif contenant du phosphore par le conduit d'amenée 22 et un additif de vitrification par le conduit d'amenée 23.

Comme précédemment, un conduit 24 évacue les gaz issus de la réaction et qui entraînent avec eux des poussières susceptibles de contenir encore des chlorures métalliques. Après passage dans le dépoussiéreur 7, via le dispositif de refroidissement des fumées 8, les poussières sont recyclées dans le four par le conduit 25. En 26, on récupère le verre de confinement des cendres phosphatées.

## Revendications

1. Procédé de traitement des cendres volantes issues d'un incinérateur de déchets et contenant des chlorures de métaux toxiques, comprenant une étape consistant à soumettre lesdites cendres volantes à une réaction de phosphatation, à haute température, pour transformer les chlorures de métaux toxiques en phosphates, la réaction de phosphatation étant obtenue par l'ajout d'un réactif constitué d'un composé du phosphore, **caractérisé en ce que** ledit composé du phosphore est un composé non métallique et **en ce que** les produits chlorés obtenus sont évacués sous forme gazeuse.

2. Procédé selon la revendication 1, **caractérisé en ce que** la température de la réaction est comprise entre 500 et 1200°C.

3. Procédé selon l'une des revendications 1 ou 2, **caractérisé en ce que** le réactif est choisi parmi le groupe constitué de l'acide phosphorique, de l'anhydride phosphorique et du phosphate d'ammonium.

4. Procédé selon l'une des revendications 1 ou 2, **caractérisé en ce que** le réactif est un composé organique du phosphore.

## Patentansprüche

1. Verfahren zur Behandlung von Flugaschen, die aus einer Müllverbrennungsanlage stammen und toxische Metallchloride enthalten, das eine Stufe umfasst, die darin besteht, dass man die Flugaschen bei hoher Temperatur einer Phosphatierungsreaktion unterwirft, um die toxischen Metallchloride in Phosphate zu überführen, wobei die Phosphatierungsreaktion erhalten wird durch Zugabe eines aus einer Phosphorverbindung bestehenden Reagens, **dadurch gekennzeichnet, dass** die Phosphorverbindung eine nichtmetallische Verbindung ist und dass die erhaltenen chlorierten Produkte in gasförmiger Form abgezogen werden.

2. Verfahren nach Anspruch 1, **dadurch gekennzeichnet, dass** die Reaktionstemperatur zwischen 500 und 1200 °C liegt.

3. Verfahren nach einem der Ansprüche 1 oder 2, **dadurch gekennzeichnet, dass** das Reagens ausgewählt wird aus der Gruppe, die besteht Phosphorsäure, Phosphorsäureanhydrid und Ammoniumphosphat.

4. Verfahren nach einem der Ansprüche 1 oder 2, **dadurch gekennzeichnet, dass** das Reagens eine organische Phosphorverbindung ist.

## Claims

1. Process for the treatment of fly ash produced by a waste incinerator and containing chlorides of toxic metals, including a stage consisting of subjecting said fly ash to a phosphating reaction, at high temperature, in order to convert the toxic metal chlorides into phosphates, the phosphating reaction being obtained by addition of a reagent comprising a phosphorus compound, **characterized in that** said phosphorus compound is a non-metallic compound and **in that** the chlorinated products obtained are discharged in a gaseous form.

2. Process according to claim 1, **characterized in that** the reaction temperature is between 500 and 1200°C.

3. Process according to one of claims 1 or 2, **characterized in that** the reactant is chosen from the group constituted by phosphoric acid, phosphoric anhydride and ammonium phosphate.

4. Process according to one of claims 1 or 2, **characterized in that** the reactant is an organic compound of phosphorus.
